# EUROPEAN PATENT SPECIFICATION

(11) **EP 4 468 122 B1**
(45) Date of publication and mention of the grant of the patent: **06.05.2026**
(21) Application number: 23743332.1
(22) Date of filing: 19.01.2023
(51) Int. Cl.: G06F 3/01, G06F 3/0488, G06F 3/0482, G06F 3/04842, G06F 3/04845, G06F 3/0485

(54) **SYSTEM, METHOD, AND PROGRAM FOR REALIZING USER INTERFACE BASED ON FINGER IDENTIFICATION**
SYSTEM, VERFAHREN UND PROGRAMM ZUR HERSTELLUNG EINER BENUTZERSCHNITTSTELLE AUF DER BASIS VON FINGERIDENTIFIKATION
SYSTÈME, PROCÉDÉ ET PROGRAMME POUR RÉALISER UNE INTERFACE UTILISATEUR SUR LA BASE D'UNE IDENTIFICATION DE DOIGT

(30) Priority: 19.01.2022 JP 2022006752
(43) Date of publication of application: 27.11.2024
(73) Proprietor: Metamatiks Pte. Ltd., Singapore 339407 (SG)
(72) Inventor: INOUE, Yohei, Sentosa Island 098297 (SG)
(74) Representative: Marks & Clerk LLP
(86) International application number: PCT/JP2023/001599
(87) International publication number: WO 2023/140340

(56) References cited:
- WO-A1-2006/104132
- WO-A1-2008/078603
- WO-A1-2013/080425
- JP-A- 2011 180 843
- JP-A- 2012 527 657
- JP-A- 2015 170 102
- US-A1- 2008 163 131
- US-A1- 2015 253 887
- US-A1- 2016 048 323

## Description

### TECHNICAL FIELD

The present invention relates to a system, method and program for realizing a user interface based on finger identification.

### BACKGROUND ART

Various techniques have been proposed for user interfaces that allow users to interact with computers. One of these techniques is realized by identifying each finger of the user's hand and assigning a function to each.

The basic example of such a technique is to assign a different function to each finger. If fixed functions are assigned, only 10 functions can be assigned for 10 fingers. Since 10 functions are not sufficient for many applications, it is necessary to appropriately switch the pairs of functions to be assigned. In order to use the assigned functions smoothly, it is important to make the correspondence between functions and fingers easily understandable.

Patent document 1 describes a technology that associates a TV function to a finger. When said finger is in contact with the touchscreen 2, the technology associates a cancel function or a setting function of the TV function to another finger (FIG. 21, etc.). Patent document 2 provides a Touch Enhanced Interface (TEI) that translates data from touch devices into a wide variety of output actions. Patent document 3 provides a multipoint detectable touch panel detecting touches of a plurality of operation fingers onto an operating surface. Patent document 4 provides a user interface system comprising an operation section, a finger position detecting section, a component storing section, an assignment section, and a display controlling section, among others.

### PRIOR ART

### PATENT DOCUMENTS

Patent document 1: International Publication No. 2006/104132
Patent document 2: US 2016/048323
Patent document 3: US 2015/253887
Patent document 4: US 2008/163131
Patent document 1: International Publication No. 2006/104132

### SUMMARY OF THE INVENTION

### TECHNICAL PROBLEM

Further improvements can be made in the user interface that identifies the user's fingers and assigns functions to multiple identified fingers.

The present invention was made in view of the above, and its problem is to realize a more intuitive and efficient user interface based on the identification of each finger of the user in a system, method or program for providing a user interface to a user.

### SOLUTION TO THE PROBLEM

A first aspect of the present invention is a method for providing a user interface to a user, comprising steps of: identifying a plurality of fingers of the user; assigning a mode switching function or a mode switching function and an object selection function to a first finger of the identified plurality of fingers; and switching functions assigned to a second finger and a third finger of the identified plurality of fingers to different functions in response to an action by the first finger, the action being (i) a touch action , when the mode switching function is assigned to the first finger; or (ii) a touch action or a hover action, when the mode switching function and the object selection function are assigned to the first finger; wherein at least one of the second finger and the third finger is different from the first finger; and wherein when the object selection function is not assigned to the first finger, returning a function of the second finger or the third finger to its pre-switching function in response to release of the action by the first finger.

Preferred embodiments are defined in the appended dependent claims.

Another aspect of the present invention is a program for causing a computer to perform a method of providing a user interface to a user, the method comprising steps of: identifying a plurality of fingers of the user; assigning a mode switching function or a mode switching function and an object selection function to a first finger of the identified plurality of fingers; and switching functions assigned to a second finger and a third finger of the identified plurality of fingers to different functions in response to an action by the first finger, the action being (i) a touch action , when the mode switching function is assigned to the first finger; or (ii) a touch action or a hover action, when the mode switching function and the object selection function are assigned to the first finger; wherein at least one of the second finger and the third finger is different from the first finger; and wherein when the object selection function is not assigned to the first finger, returning a function of the second finger or the third finger to its pre-switching function in response to release of the action by the first finger.

Another aspect of the present invention is an apparatus for providing a user interface to a user, configured to: identify a plurality of fingers of the user; assign a mode switching function or a mode switching function and an object selection function to a first finger of the identified plurality of fingers; and switch functions assigned to a second finger and a third finger of the identified plurality of fingers to different functions in response to an action by the first finger, the action being (i) a touch action, when the mode switching function is assigned to the first finger; or (ii) a touch action or a hover action, when the mode switching function and the object selection function are assigned to the first finger; wherein at least one of the second finger and the third finger is different from the first finger; and wherein when the object selection function is not assigned to the first finger, a function of the second finger or the third finger is returned to its pre-switching function in response to release of the action by the first finger.

According to aspects of the present invention, which are defined in the appended claims, an intuitive and efficient user interface can be realized based on the identification of each finger of the user.

### BRIEF DESCRIPTION OF THE DRAWINGS

FIG. 1 shows the overall configuration of the system that realizes finger identification multi-touch interaction according to an embodiment of the present invention.
FIG. 2 shows an example of a computer program for realizing a finger identification multi-touch interaction according to an embodiment of the present invention.
FIG. 3 shows the correspondence between fingers and functions in a slide creation application according to an embodiment of the present invention.
FIG. 4A shows the correspondence between fingers and functions before adding an object according to an embodiment of the present invention.
FIG. 4B shows the correspondence between fingers and functions when adding an object according to an embodiment of the present invention.
FIG. 5 shows the correspondence between fingers and functions during object editing according to an embodiment of the present invention.
FIG. 6A shows the correspondence between the finger and the function before the selection of a figure according to an embodiment of the present invention.
FIG. 6B shows the correspondence between fingers and functions during figure selection according to an embodiment of the present invention.
FIG. 7 illustrates the color change of a figure by parameter control according to an embodiment of the present invention.
FIG. 8 illustrates the rotation of a figure by parameter control according to an embodiment of the present invention.
Fig. 9 illustrates the alignment of figures by parameter control according to an embodiment of the present invention.

### DESCRIPTION OF THE EMBODIMENTS

Embodiments of the present invention is explained with reference to the figures. All figures are illustrative. The present specification discloses a system, method, and program regarding an interaction with a computer realized by identifying multiple fingers of a user and performing multiple touch actions using the identified fingers (hereinafter also referred to as "finger-identification multi-touch interaction").

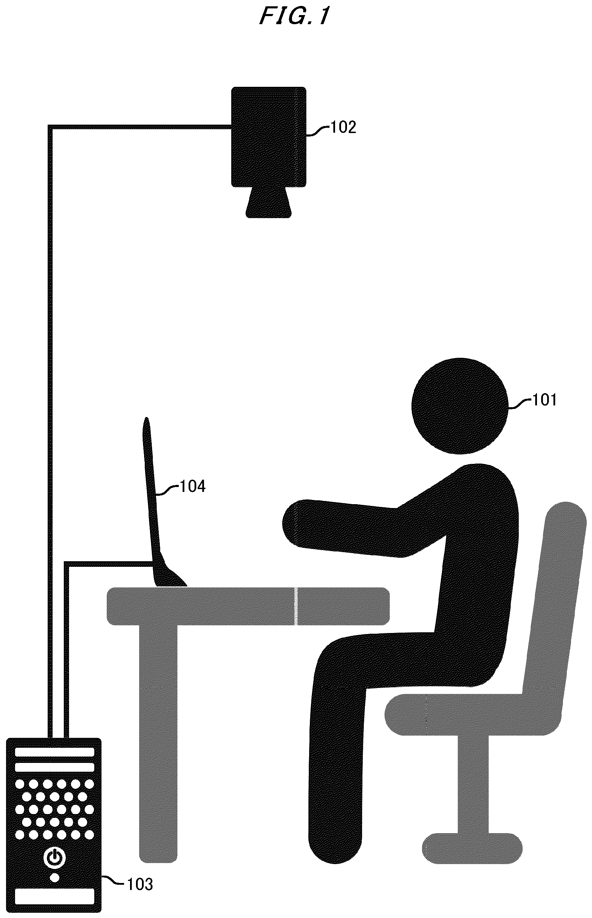

FIG.1 shows the overall configuration of a system for realizing finger identification multi-touch interaction according to an embodiment of the present invention. The user interface to an application is realized by capturing images of one or both hands of the user (101) with a camera (102) installed above the head or the like, and recognizing the position of each finger through the processing by a control program (described below) running on a computer (103). Recognition of finger positions should be performed not only in the horizontal direction but also in the vertical direction. To make the recognition of the vertical position of a finger (especially the tap action described below) easier for the user (101) to understand, it is preferable that the finger operation is performed on a horizontal surface such as a desk. Although user interface with an application is described below as the primary example, the present invention is also applicable to user interface with an OS or middleware, and specifically, a "screen" referred to below is not limited to a screen displayed by an application, but also includes a screen displayed by an OS or middleware.

As a guide to the user (101), a schematic user hand (hereinafter also referred to as "virtual hand") is preferably displayed on a display (104). It is preferable that the virtual hand and the application screen are superimposed on the display (104) so that the user can directly perform actions such as shape editing on the application screen. To improve the accuracy of the image recognition process of the hands by the camera (102), a sheet of a single color may be placed under both hands of the user (101). Black is preferred for said color. A tactile feedback (haptics) device (not shown) may be placed on the desk to provide feedback to touch or other actions by the user. An apparatus may be provided to provide feedback of user input by sound, light, or other means. The display (104) and the surface for actions may be integrated into a single structure.

The camera (102) is preferably a camera equipped with a depth sensor to increase the accuracy of finger position recognition. It preferable that it captures color images to increase the accuracy of finger recognition. An input of the user (101) is preferably performed not only with one hand but also with both hands. Recognition of the user's (101) finger operation may be realized by any recognition method, such as a conventional touch screen, touch pad, smart glove with built-in sensors or a combination of these instead of capturing by the camera (102). The functionality of the computer (103) may be realized by an external server, such as a cloud. The computer (103) may be equipped with other input devices (mouse, keyboard, etc.) for auxiliary use, but not shown.

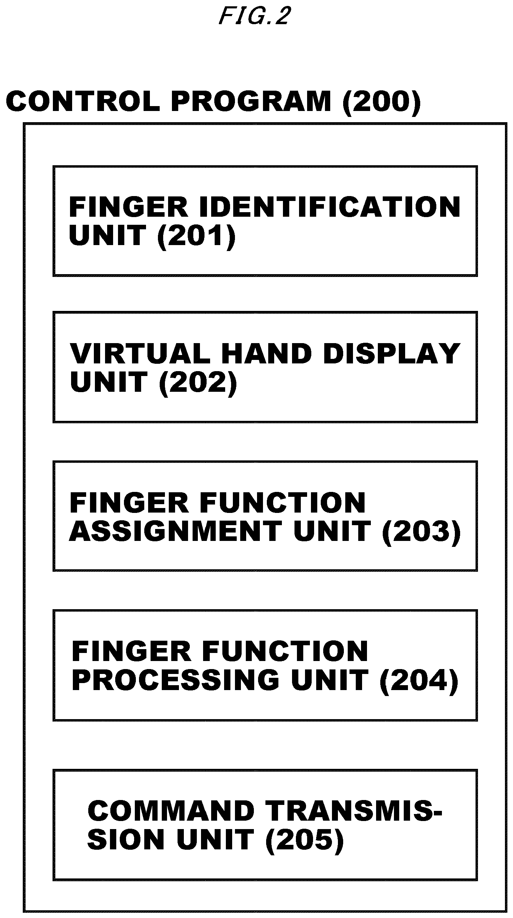

FIG. 2 shows an example of a control program for realizing a finger identification multi-touch interaction according to an embodiment of the present invention. The finger recognition unit (201) is responsible for recognizing the position of each finger of the hand of the user (101) and converting it into coordinate data by performing contour extraction processing on the image captured by the camera (102). It is preferable to recognize the vertical position in addition to the horizontal position for the position. By recognizing the vertical position, the judgment process for a tap or hover action, as described below, may be performed. The virtual hand display unit (202) plays the role of displaying on the display (104) a virtual hand representing the state of each finger of the hand of the user (101) and associated icons or labels. The finger function assignment unit (203) assigns to each finger of the user (101) a function such as command processing, temporary mode switching, object selection, parameter control, etc. appropriate to the current situation. It also plays the role of changing the function assignment to a finger when a certain action is taken. The finger function processing unit (204) plays the role of performing the function assigned to a finger at that time when the user performs a touch action. The command transmission unit (205) plays the role of transmitting a command to an application to process the function assigned to the finger that performed the touch action. Here, a "command processing" means the processing identified by a command, and different commands are executed depending on the type of processing.

Here, a "touch action" is typically the action of lowering a floating finger to the surface of a desk, but it may also be a contact with an object other than a desk, such as a touch screen, touch pad, or other part of the body such as the thigh/other hand, etc. and may be realized in any way (these actions are also referred to as "touch actions"). A touch action may be performed simultaneously with multiple fingers as a set of fingers. In addition to a contact, the fact that a finger is pushed in with a pressure above a certain level may be detected as a touch action.

It is not necessary that each part of the control program (200) corresponds to a single program module. Some or all of the functions may be realized by linking the control program (200) with a program such as an application. Examples of such programs include a web browser, JavaScript (registered trademark) that can run on a web browser, a native program that can be linked with the JavaScript, etc. In addition, some or all of the functions may be performed on a peripheral device such as a camera, or on an external computer such as a cloud. It can also be stored on a computer-readable storage medium to form a non-transitory program product.

The finger identification multi-touch interaction according to an embodiment of the present invention may display icons or labels on the fingertips of the virtual hand representing fingers identified by a camera or other means to represent functions assigned to the fingers. This, together with the temporary mode switching described below, allows many types of direct actions more than the number of fingers to be performed on the object of the actions. It may also be possible to select functions in a hierarchical manner by switching the assignment of a group of functions by means of temporary mode switching. In addition, the mode can also be switched by selecting an object of an action to enable context-sensitive function selection.

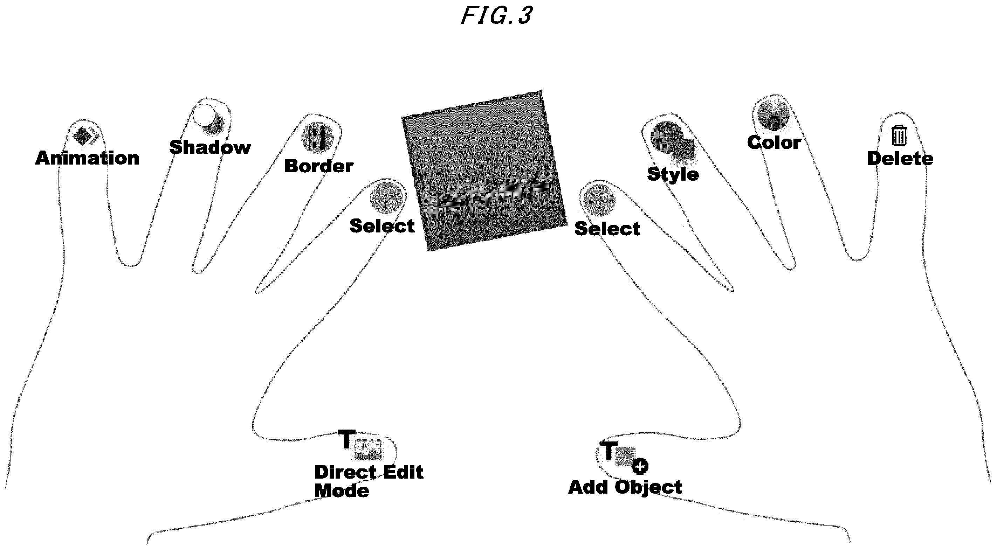

FIG. 3 shows an example of the correspondence between each finger and its function on the virtual hand in a slide creation application according to an embodiment of the present invention. The right thumb is assigned the function "Add Object" and the right index finger is assigned the function "Select." Functions may include command processing, temporary mode switching, selection of an object of an action, and parameter control. In the example in FIG. 3, the right index finger and left index finger are assigned the function of "selection of action object " while the right thumb and left thumb are assigned the function of "temporary mode switching." Specifically, the right hand thumb is assigned the function of "add object," and in response to the detection of a touch action by the right hand thumb, the mode is temporarily switched and a different set of functions is assigned to each finger. The function assignment to each finger may be performed by the finger function assignment unit (203) of the control program (200). As an example, when a user (101) performs a touch action with a certain finger, the finger function processing unit (204) processes the function that was assigned to the corresponding finger on the virtual hand at that time. If the function in question is command processing in an application, information on the command is transmitted to the application via the command transmission unit (205) of the control program (200), and the prescribed processing is performed.

Here, even if the fingertip is outside the screen area, if the fingertip is within the recognition range of the fingertip position recognition means such as the camera (102), it is preferable that the icon is displayed at the edge of the screen to allow the user to see and touch the screen. It is preferable that the vertical coordinate position, if it is the left or right screen edge, or the horizontal coordinate position, if it is the top or bottom screen edge, is moved in conjunction with the corresponding fingertip. This will seamlessly present an icon when the finger moves out of the screen or into the screen, and prevent the screen edge from being fixedly obscured by an icon. When the fingertip is the camera (102) or other fingertip position recognition means, it is preferable that the icon or label is hidden or changed in color or transparency to indicate to the user that the finger is out of recognition range.

The icons displayed with the virtual hand may be made larger to facilitate visual exploration. In the case of a conventional user interface such as a toolbar, if the icons are large, they will occupy a fixed amount of screen space, but in the finger identification multi-touch interaction according to the present embodiment, even if the icons are displayed relatively large, they can be moved simply by moving the hand, so the screen space is not occupied in a fixed manner. It is preferable to enable displaying larger icons for users with poor eyesight or beginners, and smaller icons for skilled users.

It is preferable to display a cursor on one or more fingertips to indicate that object selection is possible or to indicate a hotspot or area for selection. This is because in addition to the fingers for object selection, there are fingers for a command processing or mode switching and it is necessary to clarify which fingers are available for object selection. If it is not the finger for object selection, it is preferable to display a specific cursor to indicate so, or to display only an icon.

If the user is a novice, it is preferable to display both icons and labels because the user searches for functions by visual or direct exploration. However, in the finger-identification multi-touch interaction according to the present embodiment, since the selection can be made without seeing and there is no need to always present the labels, it is preferable for skilled users to hide the labels and display them only when fingers are positioned above a certain height from the desk, so that skilled users can check them immediately in case they forget.

### (Temporary mode switching)

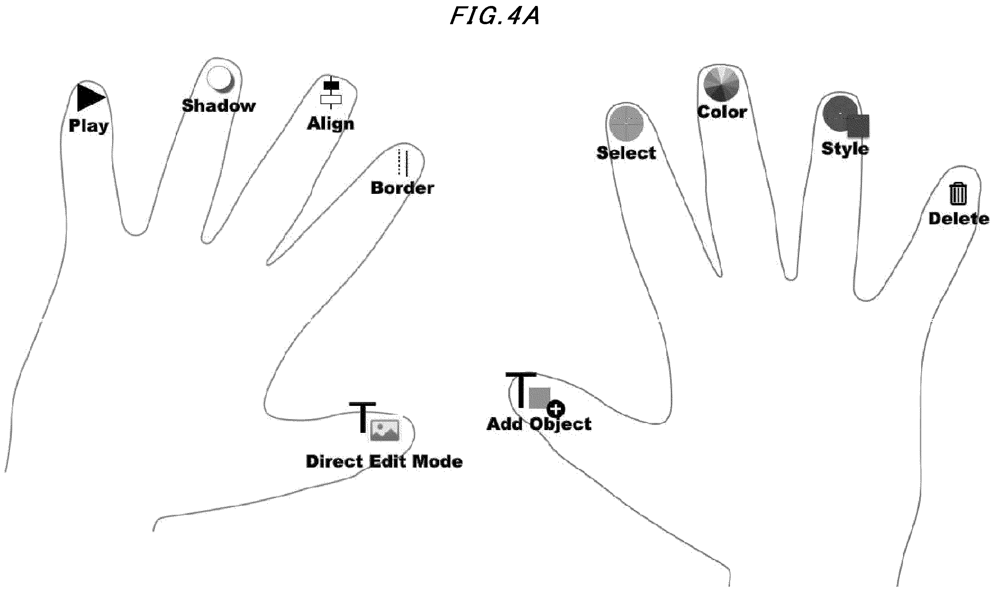

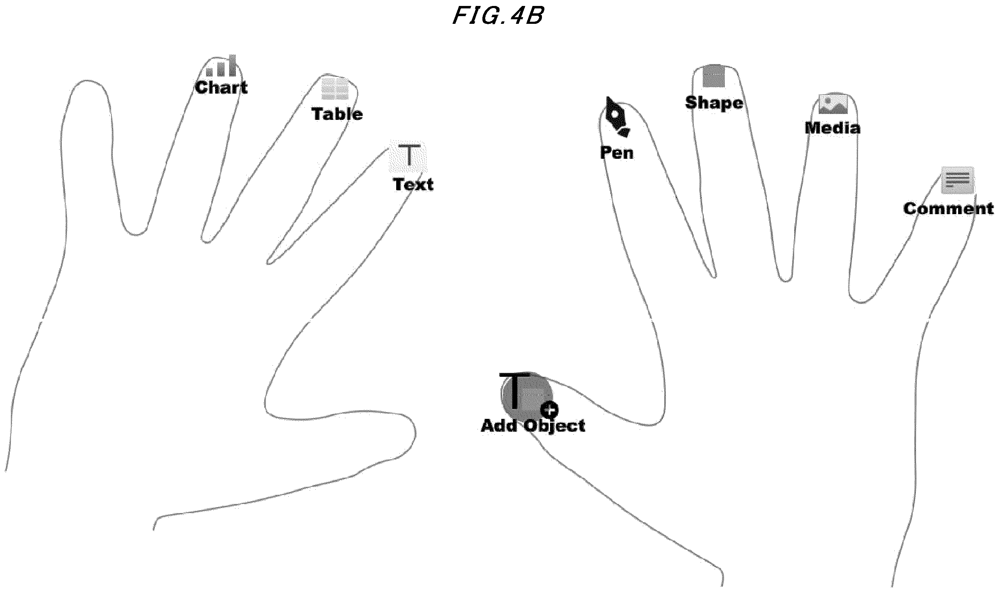

FIGS. 4A and 4B show examples of object addition in a figure editing application according to an embodiment of the present invention. When a touch action is performed with a specific finger (corresponding to a "first finger"), a new set of functions can be assigned to multiple fingers (corresponding to "second finger" and "third finger"). A new function may be assigned to the specific finger by which the touch action was performed. The specific finger may be a single finger, such as the index finger of the right hand, or a specific set of multiple fingers. The mode may be switched only while the touch action by the specific fingers is continued, and the mode may be restored when the touch action is released. FIG. 4A is the state in which no touch action is performed with the right thumb, and FIG. 4B is the state in which touch action is performed with and the right thumb. In this example, by performing a touch action with the right hand thumb to which the temporary mode switching function to the "Add object" mode is assigned, the function group assigned to the other fingers is switched and the object to be added can be determined. For example, if the touch action is performed with the left index finger while the touch action is maintained with the right thumb, the command processing function of adding a text is executed. When the right thumb touch action is released, the mode returns to the original state, as shown in FIG. 4A above. When an object is added, it may be controlled to add the object at the position of the dominant index finger. The index finger of the dominant hand is often assigned command processing functions to manipulate objects, such as intuitive movement for the user. Since movement after adding an object is a frequently performed pattern, the efficiency of the action can be improved.

In the basic process of temporary mode switching, when the touch action with the finger that activated the temporary mode is released, the mode is restored and the function group assignment to the fingers returns to the state before the switch. Alternatively, the mode may be permanently switched when the touch action is performed for a short period of time equal to or below a predetermined time (tap action), and returned to the pre-switching state in response to the release of the touch action when the touch action is performed for longer than or equal to the predetermined time (long press action). Although the functions assigned to multiple fingers are mainly described as being switched on a mode-by-mode basis, it is conceivable to control the return to the pre-switching state only for some of the multiple fingers, or not to return to the pre-switching state, when the predetermined conditions are met.

### (Temporary mode switching with object selection)

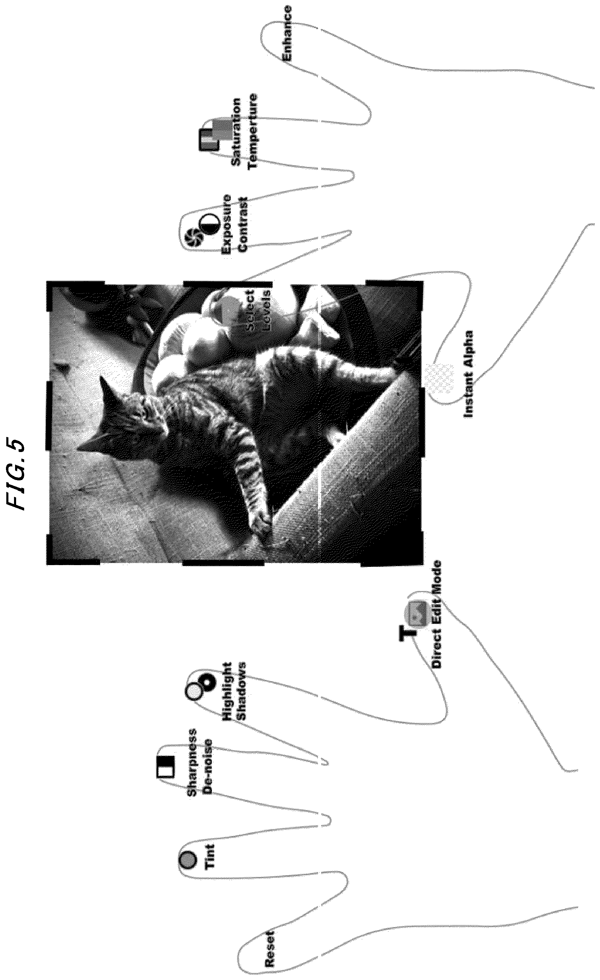

FIG. 5 shows the correspondence between fingers and functions during object editing. In this example, touch action is performed by the left thumb to which the function of switching to Direct Edit Mode is assigned, and while it continues, the image editing command processing is assigned to the other fingers. For example, the image can be touched with the middle finger of the right hand, to which the Exposure Contrast command processing is assigned, to edit exposure and contrast. The advantage of this action is that the selection of the image to be edited and the execution of the command processing function can be performed in a single action. Here, when the touch action with the left thumb is released, the mode may be restored and perform a control to return the assignment of the function group to the fingers to the pre-switching state of FIG. 4A, or the mode may be restored only under predetermined conditions as in the previous paragraph.

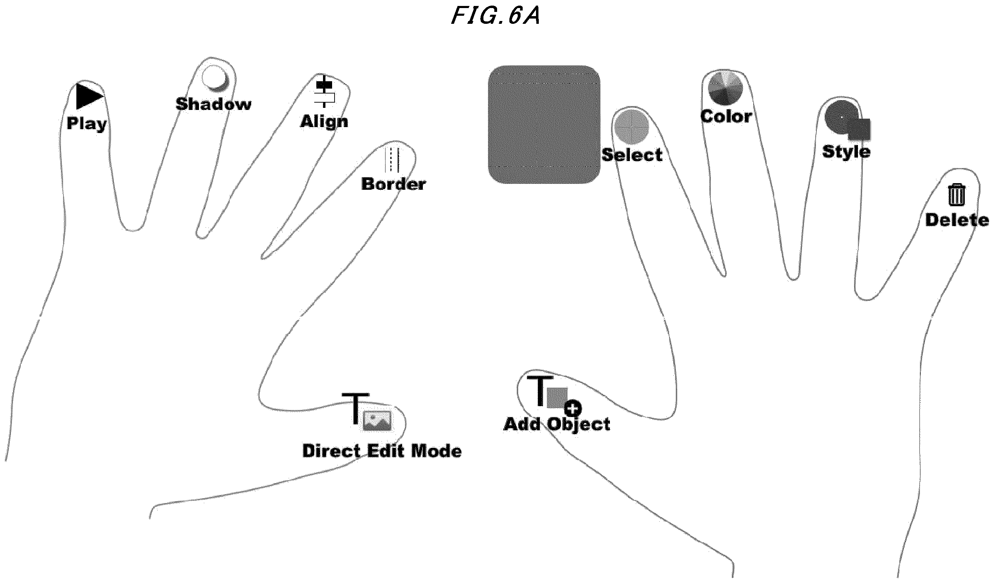

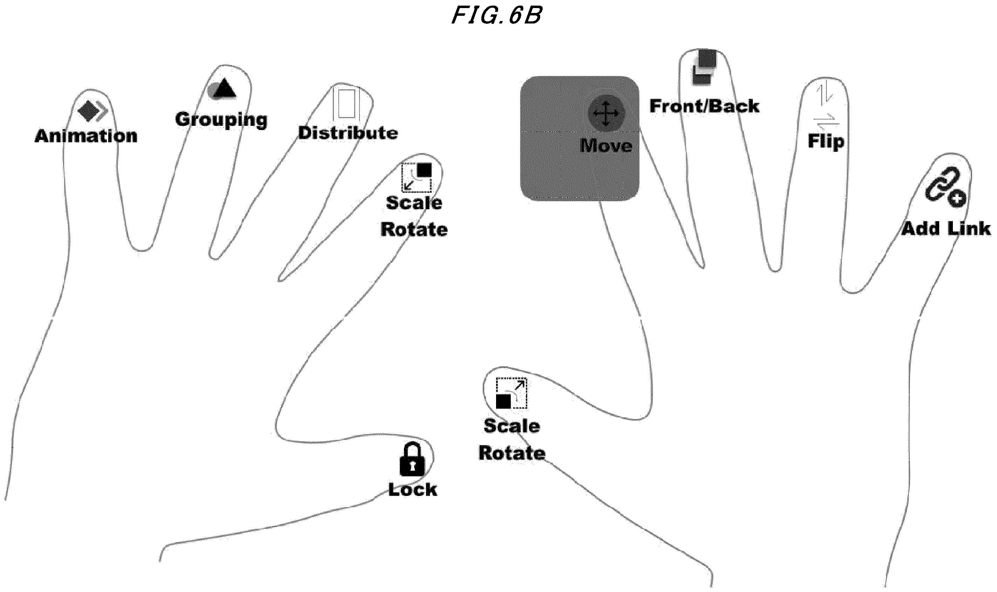

FIGS 6A and 6B show examples of figure editing according to an embodiment of the present invention. In this example, triggered by the selection of an object of an action, the set of functions assigned to the fingers is switched. Similar to the temporary mode switching described above, the mode may be controlled so that the mode is temporarily switched only while the touch action is continued and returns to the original mode when the touch action is released, or the mode may be controlled to return only under certain conditions. FIG. 6A shows a state in which no touch action is performed on an object, and FIG. 6B shows a state in which a touch action is performed on an object with the right index finger to select it. The assignment of functions to each finger may be switched so that actions can be performed on that figure only while the touch action is maintained.

Even if the touch action is released, the selection state of the object of an action may be continued. In this case, control may be performed such that the mode is not returned even after the touch action is released. For example, the selection state of an object may be terminated when the touch action is performed again on the object in question or when the touch action is released. Any other action may be used to terminate the selection state. The mode may then be restored in response to the termination of the selection state. Alternatively, if the touch action is released while an object is being selected, a control may be performed to assign a different set of functions to the fingers than before the selection of the object in question. The fact that an object is being selected means that further actions on that object are likely to be performed. Furthermore, when the touch action is released while the object is being selected, control may be performed to assign a different set of functions to the fingers than before and during the touch action of the object in question.

Multiple objects may be selectable, and the function group assigned to each finger may be switched according to the types of multiple objects selected. In this case, the switching of the function group can be performed, for example, at the time when multiple objects are selected, at the time when additional objects are selected while multiple objects are selected, at the time when the selection state of any object ends while multiple objects are selected, or at the time when a touch action is performed on any of the objects in a state in which multiple objects are selected.

In the object selection state, control may be performed such that a touch action on another object with the finger to which the selection function is assigned (e.g., right index finger) results in an additional selection while the touch action of the specific finger (e.g., right thumb) is continued, if necessary. Alternatively, in the state of object selection, while continuing the touch action of a specific finger as necessary, another object may be additionally selected by dragging the finger used to select that object to the area where another object exists. A multiple selection function may be assigned to a finger so that multiple touch actions may be performed with the finger and multiple objects existing within a rectangular, polygonal, circular or elliptical area connecting the points where those touch actions were performed may be selected. In addition, a multiple selection function may be assigned to a finger so that a drag operation may be performed with the finger and multiple objects that exist within the area enclosed by the locus may be selected. The function of the finger to which a selection function is assigned may be switched to a multiple selection function by continued touch action of a specific finger.

Here, a hover action may be used instead of a touch action as a trigger for object selection. In other words, in the example in FIG. 6B, the coordinates of the right index finger can be positioned on the object of an action, or in other words, a temporary mode switch can be performed simply by hovering. If a touch action is then performed with a finger other than the right index finger, the function assigned to that finger may be performed. In determining whether a hover action has been performed, it may be determined that a hover action is in progress when a given finger is below a predetermined height. Typically, this is when the distance between the desk surface and the finger is equal to or below a predetermined value. Alternatively, the hover operation may be determined based on the difference from the height of the other finger, and the hover may be considered to be performed when the finger is at a distance equal to or lower than the predetermined distance from the other finger. In this case, the height of the other finger may be the height of the lowest finger other than the finger performing the hover action, the average of the heights of multiple fingers other than the finger performing the hover action, or the height of a finger adjacent to the finger performing the hover action. By taking the finger height into account in determining the hover action in this way, the problem of frequent screen rewrites due to mode switching can be avoided.

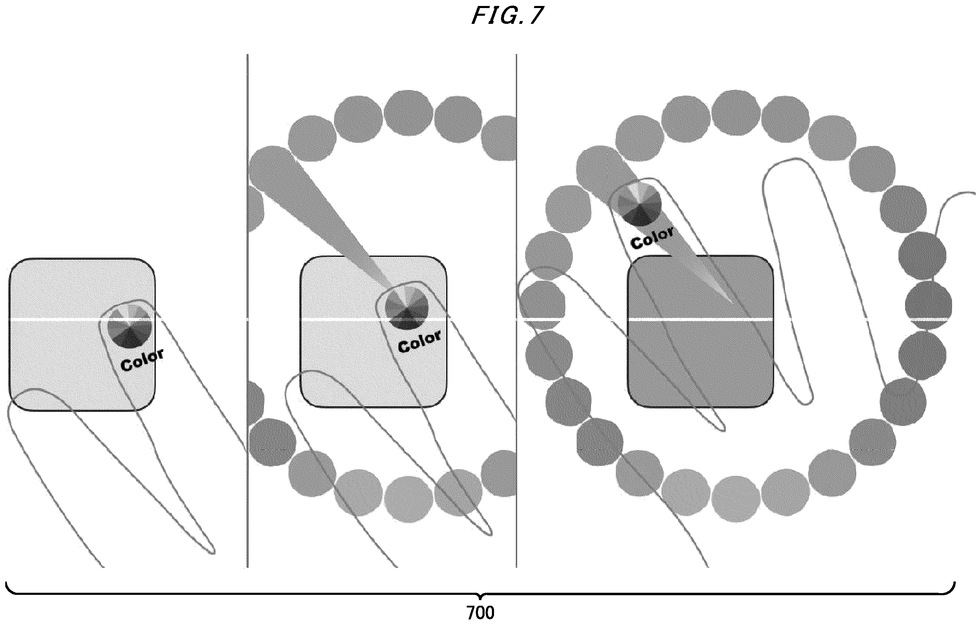

FIG. 7 shows the flow of color change by parameter control according to an embodiment of the present invention. The illustration is in monochrome, but in reality, each circle arranged in a circular pattern will be displayed in a different color. FIG. 7 shows the flow 700 of controlling parameters by sliding the finger while maintaining the touch action. First, a touch action is performed on the figure with the middle finger of the right hand, to which the color change function is assigned. Then, a color change menu with multiple color choices arranged in a circular pattern appears. The color of the figure can then be changed by selecting one of the color choices while maintaining the touch action with the middle finger of the right hand. When the touch action of the right hand middle finger is released, the function assignment to the finger may be restored. In general, a single finger touch action can control two degrees of freedom, up, down, left, and right. While maintaining the touch action of the first finger by which touch was performed, parameter controls may be assigned to other fingers to allow control of different parameters. Depending on the function, parameters may be controllable with two or more fingers. This theoretically allows a total of 20 degrees of freedom of control with 10 fingers of both hands. Selection of choices from the displayed menu may be made possible by a different finger than the finger that performed the touch action on the figure. In addition to color changes, the parameter control shown in FIG. 7 can also be applied to brushes, fonts, etc., allowing the user to efficiently perform actions such as selecting one of many choices.

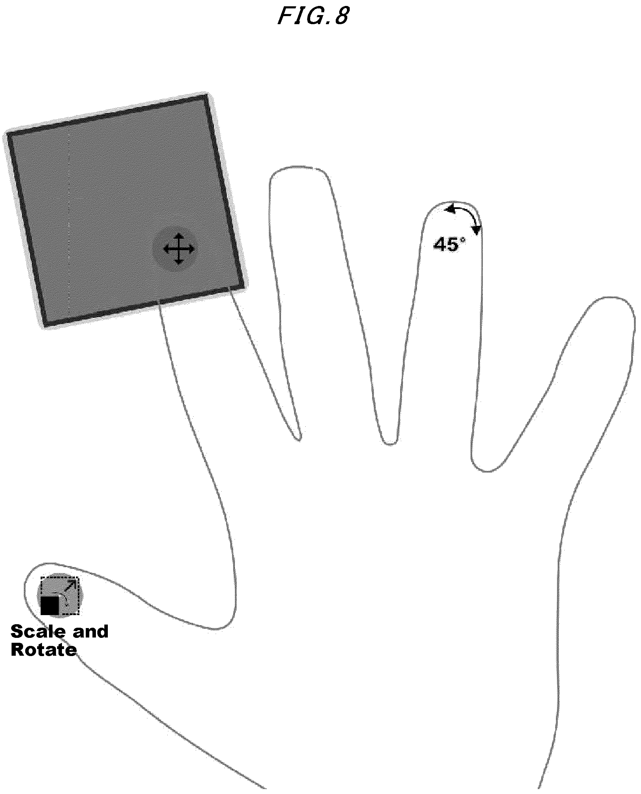

FIG. 8 illustrates the rotation of a figure with parameter control according to an embodiment of the present invention. In the example in FIG. 8, the parameter of rotation angle is constrained to 45-degree units in the editing function that rotates the figure. The figure can be selected with the right index finger, to which the object selection function is assigned, and rotated with the right thumb, to which the rotation function and the parameter control function, which uses the rotation angle as a parameter, are assigned. By assigning the parameter constraint function that constrains the rotation angle to 45-degree units to the ring finger of the right hand and performing a touch action with the ring finger, the rotation angle determined by the right hand thumb drag action can be set to 45-degree units. The rotation function assigned to the right hand thumb can be performed at predetermined time intervals while the touch action of the right hand thumb is continued, and the rotation angle can be determined according to the drag action.

More generally, if the parameter control function is assigned to a specific finger, then another finger can be assigned the ability to change the parameter control function, and while the touch action with the that finger continues, at least one of the type of parameter determined by the action of that specific finger, the number of the parameters and the unit of increase or decrease of the value of each parameter can be changed. An example of changing the number of parameters is changing from a two-dimensional angle of rotation to a three-dimensional angle of rotation. Assignment of the change function to another finger may be made at the time of assignment of the parameter control function to a particular finger, or alternatively, in response to the detection of a touch action by a particular finger.

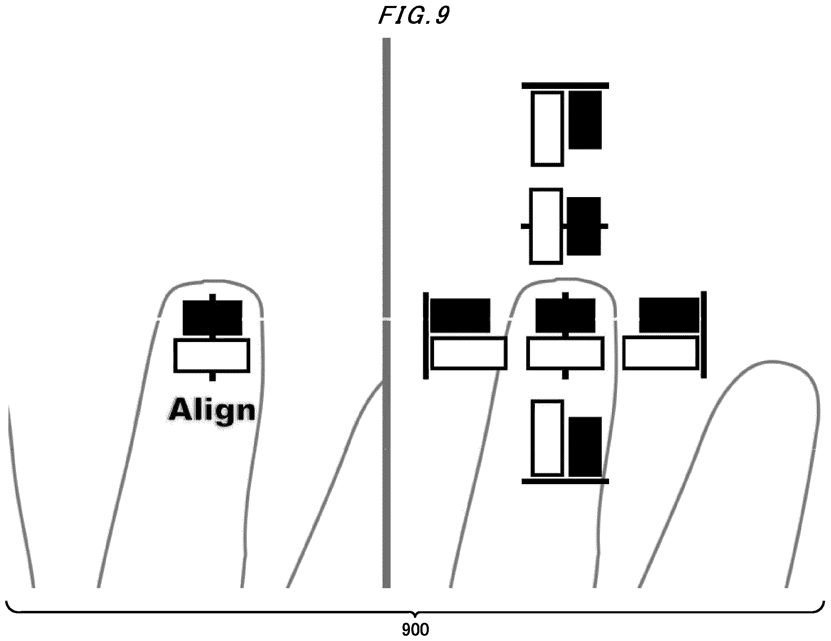

FIG. 9 shows the alignment of shapes by parameter control according to an embodiment of the present invention. Although many functions can be assigned to a finger by mode switching, the deeper the hierarchy, the more complex it becomes and the longer the function selection time is expected to be. Therefore, the complexity can be avoided by making some groupable multiple functions selectable from a context menu. FIG. 9 is an example of the align command processing, showing a change 900 from the left side where no touch action is performed to the right side where a touch action is performed and a menu is displayed. In this example, if the finger is released, the image is aligned horizontally in the center, and other options such as up, down, left, right, and vertical center can be selected.

In the above description, the command processing is mainly an example of editing objects, but it can be processing to an object other than editing. Examples of such processing include conversion such as translation of selected text, web search based on selected text, storing such as exporting the selected object to a file, copying the selected object, computing based on the selected text, sending the selected object, etc., and any combination of these can also be used. For example, when an object is selected and moved with a specific finger (e.g., the index finger of the right hand), i.e., when an object is selected with a finger to which the selection function is assigned and the function of the movement action is assigned to that finger, moving after touch action with another finger (e.g., the ring finger of the right hand) will instead of the editing processing of simply moving an object, a combined control may be performed so that the object is copied and then moved.

## Claims

1. A method for providing a user interface to a user (101), comprising steps of:
identifying a plurality of fingers of the user;
assigning a mode switching function or a mode switching function and an object selection function to a first finger of the identified plurality of fingers; and
switching functions assigned to a second finger and a third finger of the identified plurality of fingers to different functions in response to an action by the first finger, the action being (i) a touch action , when the mode switching function is assigned to the first finger; or (ii) a touch action or a hover action, when the mode switching function and the object selection function are assigned to the first finger;
wherein at least one of the second finger and the third finger is different from the first finger; and
wherein when the object selection function is not assigned to the first finger, returning a function of the second finger or the third finger to its pre-switching function in response to release of the action by the first finger.

2. The method according to claim 1, wherein when the object selection function is assigned to the first finger, a selected state of a selected object is maintained even after the touch action or the hover action on the object is released.

3. The method according to claim 1 or 2, wherein one or more functions assigned to the second finger include at least one of a command processing function, a parameter control function, and an object selection function.

4. The method according to claim 3,
wherein one or more functions assigned to the second finger after switching include a parameter control function; and
wherein one or more function assigned to the third finger after switching include a function of changing the parameter control function.

5. The method according to claim 3,
wherein one or more functions assigned to the second finger after switching include a parameter control function;
the method further includes assigning a function of changing the parameter control function to a finger different from the second finger in response to a touch action by the second finger.

6. The method according to claim 3, wherein one or more functions assigned to the second finger after switching include a command processing function, wherein the command processing function is one of: an editing function, a search function, a saving function, a copying function, a calculation function, a sending function, and any combination thereof.

7. The method according to claim 6, wherein the editing function includes at least one of moving, aligning, rotating, image editing, and adding text.

8. The method according to claim 3, wherein the second finger is the same finger as the first finger.

9. The method according to claim 1, further comprising a step of returning a function of the second finger or the third finger to a pre-switching function in response to release of the action by the first finger within or below a predetermined time when an object selection function is not assigned to the first finger.

10. The method according to claim 1, further comprising a step of displaying an icon or a label representing a function assigned to each of the identified fingers on a display (104) used by the user along with a virtual hand representing the identified plurality of fingers.

11. The method according to claim 10, wherein the label is displayed only when the finger associated with the label is positioned above a predetermined height from a desk used by the user.

12. The method according to claim 10, wherein when the user's finger is outside a screen area of the display (104), the icon or the label is displayed at the edge of the screen.

13. A program (200) for causing a computer (103) to perform a method of providing a user interface to a user (101), the method comprising steps of:
identifying a plurality of fingers of the user;
assigning a mode switching function or a mode switching function and an object selection function to a first finger of the identified plurality of fingers; and
switching functions assigned to a second finger and a third finger of the identified plurality of fingers to different functions in response to an action by the first finger, the action being (i) a touch action , when the mode switching function is assigned to the first finger; or (ii) a touch action or a hover action, when the mode switching function and the object selection function are assigned to the first finger;
wherein at least one of the second finger and the third finger is different from the first finger; and
wherein when the object selection function is not assigned to the first finger, returning a function of the second finger or the third finger to its pre-switching function in response to release of the action by the first finger.

14. An apparatus for providing a user interface to a user (101), configured to:
identify a plurality of fingers of the user;
assign a mode switching function or a mode switching function and an object selection function to a first finger of the identified plurality of fingers; and
switch functions assigned to a second finger and a third finger of the identified plurality of fingers to different functions in response to an action by the first finger, the action being (i) a touch action, when the mode switching function is assigned to the first finger; or (ii) a touch action or a hover action, when the mode switching function and the object selection function are assigned to the first finger;
wherein at least one of the second finger and the third finger is different from the first finger; and
wherein when the object selection function is not assigned to the first finger, a function of the second finger or the third finger is returned to its pre-switching function in response to release of the action by the first finger.

## Patentansprüche

1. Verfahren zum Bereitstellen einer Benutzerschnittstelle für einen Benutzer (101), umfassend folgende Schritte:
Identifizieren einer Vielzahl von Fingern des Benutzers;
Zuweisen einer Modusumschaltfunktion oder einer Modusumschaltfunktion und einer Objektauswahlfunktion zu einem ersten Finger der identifizierten Vielzahl von Fingern; und
Umschalten von Funktionen, welche einem zweiten Finger und einem dritten Finger der identifizierten Vielzahl von Fingern zugewiesen sind, auf andere Funktionen als Reaktion auf eine Aktion des ersten Fingers, wobei es sich bei der Aktion um (i) eine Berührungsaktion, wenn die Modusumschaltfunktion dem ersten Finger zugewiesen ist; oder (ii) eine Berührungsaktion oder eine Hover-Aktion handelt, wenn die Modusumschaltfunktion und die Objektauswahlfunktion dem ersten Finger zugewiesen sind;
wobei zumindest einer von dem zweiten Finger und dem dritten Finger von dem ersten Finger verschieden ist; und
wobei, wenn die Objektauswahlfunktion nicht dem ersten Finger zugewiesen ist, Zurücksetzen einer Funktion des zweiten Fingers oder des dritten Fingers auf ihre Funktion vor dem Umschalten als Reaktion auf Loslassen der Aktion durch den ersten Finger.

2. Verfahren nach Anspruch 1, wobei, wenn die Objektauswahlfunktion dem ersten Finger zugewiesen ist, ein ausgewählter Zustand eines ausgewählten Objekts selbst nach dem Loslassen der Berührungsaktion oder der Hover-Aktion mit dem Objekt beibehalten wird.

3. Verfahren nach Anspruch 1 oder 2, wobei eine oder mehrere Funktionen, welche dem zweiten Finger zugewiesen sind, zumindest eine von einer Befehlsverarbeitungsfunktion, einer Parametersteuerungsfunktion und einer Objektauswahlfunktion beinhalten.

4. Verfahren nach Anspruch 3,
wobei eine oder mehrere Funktionen, welche dem zweiten Finger nach dem Umschalten zugewiesen sind, eine Parametersteuerungsfunktion beinhalten; und
wobei eine oder mehrere Funktionen, welche dem dritten Finger nach dem Umschalten zugewiesen sind, eine Funktion zum Ändern der Parametersteuerungsfunktion beinhalten.

5. Verfahren nach Anspruch 3,
wobei eine oder mehrere Funktionen, welche dem zweiten Finger nach dem Umschalten zugewiesen sind, eine Parametersteuerungsfunktion beinhalten;
das Verfahren weiter Zuweisen einer Funktion zum Ändern der Parametersteuerungsfunktion an einen anderen Finger, welcher sich von dem zweiten Finger unterscheidet, als Reaktion auf eine Berührungsaktion durch den zweiten Finger beinhaltet.

6. Verfahren nach Anspruch 3, wobei eine oder mehrere Funktionen, welche dem zweiten Finger nach dem Umschalten zugewiesen sind, eine Befehlsverarbeitungsfunktion beinhalten, wobei die Befehlsverarbeitungsfunktion eine von einer Bearbeitungsfunktion, einer Suchfunktion, einer Speicherfunktion, einer Kopierfunktion, einer Berechnungsfunktion, einer Sendefunktion oder einer beliebige Kombination davon ist.

7. Verfahren nach Anspruch 6, wobei die Bearbeitungsfunktion zumindest eines von Verschieben, Ausrichten, Drehen, Bildbearbeitung und Hinzufügen von Text beinhaltet.

8. Verfahren nach Anspruch 3, wobei der zweite Finger der gleiche Finger ist wie der erste Finger.

9. Verfahren nach Anspruch 1, weiter einen Schritt zum Zurücksetzen einer Funktion des zweiten Fingers oder des dritten Fingers auf eine Funktion vor dem Umschalten als Reaktion auf Loslassen der Aktion durch den ersten Finger innerhalb oder unter einer vorbestimmt Zeit umfassend, wenn eine Objektauswahlfunktion nicht dem ersten Finger zugewiesen ist.

10. Verfahren nach Anspruch 1, weiter einen Schritt zum Anzeigen eines Symbols oder eines Etiketts, welches eine jedem der identifizierten Finger zugewiesene Funktion darstellt, auf einem vom Benutzer verwendeten Display (104) zusammen mit einer virtuellen Hand umfassend, welche die identifizierte Vielzahl von Fingern darstellt.

11. Verfahren nach Anspruch 10, wobei das Etikett nur dann angezeigt wird, wenn der dem Etikett zugeordnete Finger über einer vorbestimmten Höhe über einem vom Benutzer benutzten Schreibtisch positioniert ist.

12. Verfahren nach Anspruch 10, wobei, wenn sich der Finger des Benutzers außerhalb eines Bildschirmbereichs des Displays (104) befindet, das Symbol oder das Etikett am Rand des Bildschirms angezeigt wird.

13. Programm (200) zum Veranlassen eines Computers (103) ein Verfahren zum Bereitstellen einer Benutzerschnittstelle für einen Benutzer (101) auszuführen, wobei das Verfahren folgende Schritte umfasst:
Identifizieren einer Vielzahl von Fingern des Benutzers;
Zuweisen einer Modusumschaltfunktion oder einer Modusumschaltfunktion und einer Objektauswahlfunktion zu einem ersten Finger der identifizierten Vielzahl von Fingern; und
Umschalten von Funktionen, welche einem zweiten Finger und einem dritten Finger der identifizierten Vielzahl von Fingern zugewiesen sind, auf andere Funktionen als Reaktion auf eine Aktion des ersten Fingers, wobei es sich bei der Aktion um (i) eine Berührungsaktion, wenn die Modusumschaltfunktion dem ersten Finger zugewiesen ist; oder (ii) eine Berührungsaktion oder eine Hover-Aktion handelt, wenn die Modusumschaltfunktion und die Objektauswahlfunktion dem ersten Finger zugewiesen sind;
wobei zumindest einer von dem zweiten Finger und dem dritten Finger von dem ersten Finger verschieden ist; und
wobei, wenn die Objektauswahlfunktion nicht dem ersten Finger zugewiesen ist, Zurücksetzen einer Funktion des zweiten Fingers oder des dritten Fingers auf ihre Funktion vor dem Umschalten als Reaktion auf Loslassen der Aktion durch den ersten Finger.

14. Einrichtung zum Bereitstellen einer Benutzerschnittstelle für einen Benutzer (101), welche dazu konfiguriert ist:
eine Vielzahl von Fingern des Benutzers zu identifizieren;
eine Modusumschaltfunktion oder eine Modusumschaltfunktion und eine Objektauswahlfunktion einem ersten Finger der identifizierten Vielzahl von Fingern zuzuweisen; und
Funktionen, welche einem zweiten Finger und einem dritten Finger der identifizierten Vielzahl von Fingern zugewiesen sind, als Reaktion auf eine Aktion des ersten Fingers auf andere Funktionen umzuschalten, wobei es sich bei der Aktion um (i) eine Berührungsaktion, wenn die Modusumschaltfunktion dem ersten Finger zugewiesen ist; oder (ii) eine Berührungsaktion oder eine Hover-Aktion handelt, wenn die Modusumschaltfunktion und die Objektauswahlfunktion dem ersten Finger zugewiesen sind;
wobei zumindest einer von dem zweiten Finger und dem dritten Finger von dem ersten Finger verschieden ist; und
wobei, wenn die Objektauswahlfunktion nicht dem ersten Finger zugewiesen ist, eine Funktion des zweiten Fingers oder des dritten Fingers auf ihre Funktion vor dem Umschalten als Reaktion auf Loslassen der Aktion durch den ersten Finger zurückgesetzt wird.

## Revendications

1. Procédé de fourniture d'une interface utilisateur à un utilisateur (101), comprenant les étapes de :
identification de plusieurs doigts de l'utilisateur ;
attribution d'une fonction de commutation de mode, ou d'une fonction de commutation de mode et d'une fonction de sélection d'objet, à un premier doigt parmi la pluralité de doigts identifiée ; et
commutation des fonctions attribuées à un deuxième doigt et à un troisième doigt de la pluralité de doigts identifiée à des fonctions différentes en réponse à une action du premier doigt, l'action étant (i) une action tactile, lorsque la fonction de commutation de mode est attribuée au premier doigt ; ou (ii) une action tactile ou une action de survol, lorsque la fonction de commutation de mode et la fonction de sélection d'objet sont attribuées au premier doigt ;
dans lequel au moins un des deuxième et troisième doigts est différent du premier doigt ; et
dans lequel, lorsque la fonction de sélection d'objet n'est pas attribuée au premier doigt, la fonction du deuxième doigt ou du troisième doigt est rétablie à sa fonction de pré-commutation en réponse au relâchement de l'action par le premier doigt.

2. Procédé selon la revendication 1, dans lequel, lorsque la fonction de sélection d'objet est attribuée au premier doigt, l'état sélectionné d'un objet sélectionné est maintenu même après que l'action tactile ou l'action de survol sur l'objet soit relâchée.

3. Procédé selon la revendication 1 ou 2, dans lequel une ou plusieurs fonctions attribuées au deuxième doigt incluent au moins une fonction de traitement de commande, une fonction de commande de paramètre et une fonction de sélection d'objet.

4. Procédé selon la revendication 3,
dans lequel une ou plusieurs fonctions attribuées au deuxième doigt après commutation incluent une fonction de contrôle de paramètre ; et
dans lequel une ou plusieurs fonctions attribuées au troisième doigt après commutation incluent une fonction de modification de la fonction de contrôle des paramètres.

5. Procédé selon la revendication 3,
dans lequel une ou plusieurs fonctions attribuées au deuxième doigt après commutation incluent une fonction de contrôle de paramètre ;
le procédé inclut en outre l'attribution d'une fonction de modification de la fonction de contrôle du paramètre à un doigt différent du deuxième doigt en réponse à une action tactile du deuxième doigt.

6. Procédé selon la revendication 3, dans lequel une ou plusieurs fonctions attribuées au deuxième doigt après commutation incluent une fonction de traitement de commande, dans lequel cette fonction de traitement de commande est l'une des suivantes : une fonction d'édition, une fonction de recherche, une fonction d'enregistrement, une fonction de copie, une fonction de calcul, une fonction d'envoi, ou toute combinaison de celles-ci.

7. Procédé selon la revendication 6, dans lequel la fonction d'édition inclut au moins une des opérations suivantes : déplacement, alignement, rotation, édition d'image et ajout de texte.

8. Procédé selon la revendication 3, dans lequel le deuxième doigt est le même doigt que le premier doigt.

9. Procédé selon la revendication 1, comprenant en outre une étape de retour d'une fonction du deuxième doigt ou du troisième doigt à une fonction de pré-commutation en réponse au relâchement de l'action par le premier doigt dans un délai prédéterminé ou inférieur à celui-ci lorsqu'une fonction de sélection d'objet n'est pas attribuée au premier doigt.

10. Procédé selon la revendication 1, comprenant en outre une étape d'affichage d'une icône ou d'une étiquette représentant une fonction attribuée à chacun des doigts identifiés sur un écran (104) utilisé par l'utilisateur ainsi qu'une main virtuelle représentant la pluralité de doigts identifiés.

11. Procédé selon la revendication 10, dans lequel l'étiquette n'est affichée que lorsque le doigt associé à l'étiquette est positionné au-dessus d'une hauteur prédéterminée par rapport à un bureau utilisé par l'utilisateur.

12. Procédé selon la revendication 10, dans lequel, lorsque le doigt de l'utilisateur se trouve en dehors de la zone d'affichage (104), l'icône ou l'étiquette est affichée au bord de l'écran.

13. Programme (200) destiné à amener un ordinateur (103) à exécuter un procédé de fourniture d'une interface utilisateur à un utilisateur (101), le procédé comprenant les étapes de :
identification de plusieurs doigts de l'utilisateur ;
attribution d'une fonction de commutation de mode, ou d'une fonction de commutation de mode et d'une fonction de sélection d'objet, à un premier doigt parmi la pluralité de doigts identifiée ; et
commutation des fonctions attribuées à un deuxième doigt et à un troisième doigt de la pluralité de doigts identifiée à des fonctions différentes en réponse à une action du premier doigt, l'action étant (i) une action tactile, lorsque la fonction de commutation de mode est attribuée au premier doigt ; ou (ii) une action tactile ou une action de survol, lorsque la fonction de commutation de mode et la fonction de sélection d'objet sont attribuées au premier doigt ;
dans lequel au moins un des deuxième et troisième doigts est différent du premier doigt ; et
dans lequel, lorsque la fonction de sélection d'objet n'est pas attribuée au premier doigt, la fonction du deuxième doigt ou du troisième doigt est rétablie à sa fonction de pré-commutation en réponse au relâchement de l'action par le premier doigt.

14. Appareil destiné à fournir une interface utilisateur à un utilisateur (101), configuré pour :
identifier une pluralité de doigts de l'utilisateur ;
attribuer une fonction de commutation de mode, ou une fonction de commutation de mode et une fonction de sélection d'objet, à un premier doigt parmi la pluralité de doigts identifiée ; et
commuter les fonctions attribuées à un deuxième doigt et à un troisième doigt de la pluralité de doigts identifiée vers des fonctions différentes en réponse à une action du premier doigt, l'action étant (i) une action tactile, lorsque la fonction de commutation de mode est attribuée au premier doigt ; ou (ii) une action tactile ou une action de survol, lorsque la fonction de commutation de mode et la fonction de sélection d'objet sont attribuées au premier doigt ;
dans lequel au moins un des deuxième et troisième doigts est différent du premier doigt ; et
dans lequel, lorsque la fonction de sélection d'objet n'est pas attribuée au premier doigt, une fonction du deuxième doigt ou du troisième doigt est rétablie à sa fonction de commutation antérieure en réponse au relâchement de l'action par le premier doigt.
